# EUROPEAN PATENT SPECIFICATION

(11) **EP 3 053 487 B1**
(45) Date of publication and mention of the grant of the patent: **12.09.2018**
(21) Application number: 15175386.0
(22) Date of filing: 06.07.2015
(51) Int. Cl.: A47F 3/00, A47F 3/04, A47F 11/06, G02F 1/1335, G09F 9/35, G09F 23/00

(54) **COOLER HAVING A TRANSPARENT DISPLAY**
KÜHLER MIT EINER TRANSPARENTEN ANZEIGE
REFRIGERATEUR AYANT UN AFFICHAGE TRANSPARENT

(30) Priority: 03.02.2015 KR 20150016571
(43) Date of publication of application: 10.08.2016
(73) Proprietor: LG Electronics Inc., Seoul, 07336 (KR)
(72) Inventor: CHANG, Myungwhun, 137-893 Seoul (KR); HAN, Sungwook, 137-893 Seoul (KR); KIM, Donghyun, 137-893 Seoul (KR); BAE, Kukho, 137-893 Seoul (KR)
(74) Representative: Ter Meer Steinmeister & Partner

(56) References cited:
- WO-A1-2013/170303
- WO-A1-2014/175639
- US-A1- 2014 232 958

## Description

### BACKGROUND

### 1. Field

A cooler for keeping products in a cool condition, and more particularly, a cooler having a transparent display are disclosed herein.

US 2014/0232958 A1 discloses a flat panel electronic display arrangement for attachments to a transparent base structure (e.g., a fridge store). The electronic display arrangement includes a transparent LCD layer operable to display electronic images based on a video input, a light source layer arranged parallel to and operatively behind a majority of the transparent LCD layer. The light source layer is operable to emit light directly behind the majority of the transparent LCD layer and is at least partially light transmissive. The electronic display arrangement includes a frame or housing to which the transparent LCD layer and light source layer are attached, a controller operable to control the video input to the transparent LCD layer and the operation of the light source layer, and the mounting arrangement operable to mount the frame to the transparent based structure.

### 2. Background

A walk-in cooler or showcase is generally installed in a shop to display products, which will be sold, in a refrigerated state. Such a cooler has a large-sized body that may receive more products therein, if possible, to efficiently use a space of the shop, and also has a large-sized door to open and close the body. The door generally includes a large-sized glass to allow inner products to be easily viewable. Therefore, a transparent display panel is applied to the glass of the door to utilize the space formed in the door.

A conventional flat display panel, for example, a LCD (Liquid Crystal Display) or OLED (Organic Light-Emitting Diode) panel is structurally opaque, whereby a clear picture image may be provided to users. On the other hand, display panels having a transparent body have recently been developed, and are referred to herein as "transparent display panels". The transparent display panel allows a user to see an object at a rear of the panel together with information displayed on the panel due to its transparent body. Also, a third party located at an opposite side of the user may also see the information displayed on the panel.

The transparent display panel may allow a user to see products in a cooler while providing information on the products in the cooler or an advertisement if the transparent display panel is applied to the cooler. Therefore, the cooler having a transparent display may perform an additional function of promoting purchasing by a user while performing a basic function of keeping products in a fresh condition.

In more detail, the user is actually encouraged to purchase products in the cooler by information displayed at a location spaced apart from the cooler at a certain distance, that is, an advertisement and detailed information on the products kept in the cooler. Therefore, the displayed information should be seen well or easily viewable by the user located at a distance from the cooler. Meanwhile, the user is concentrated on information on the products and actual products in a state in which the user is close to the cooler. Therefore, if the cooler provides an advertisement or information, which is not directly related to the products kept in the cooler, such information should be seen well or easily viewable by the user located to be far or farther away from the cooler. However, the transparent display in the aforementioned conventional cooler cannot clearly provide the displayed information to the user located to be far or farther away from the cooler due to its transparency. Therefore, in order to make maximum use of the cooler having a transparent display, it is required or necessary to allow the user to selectively see information of the transparent display or the products in the cooler depending on the distance between the user and the cooler.

### SUMMARY OF THE INVENTION

Accordingly, embodiments disclosed herein are directed to a cooler having a transparent display, which substantially obviates one or more problems due to limitations and disadvantages of the related art.

An object the present invention is to provide a cooler having a transparent display, in which information of the transparent display or products in the cooler or in a showcase thereof may selectively be seen by a user depending on a distance between the user and the cooler.

To achieve the above object, Embodiments disclosed herein provide a cooler having a transparent display that includes a body that forms a predetermined space and keeps products in the space; a cooling unit or device installed in the body and configured to supply the cooled air into the space; a door installed in the body to open and close the space; and a transparent display assembly installed in the door and configured to provide predetermined information related to the products. The transparent display assembly includes a transparent display panel, a dispersion panel arranged at a rear of the transparent display panel and configured to scatter light, which is incident upon a side of the dispersion panel, therein, and a light source that irradiates light from the side of the dispersion panel to the inside of the dispersion panel. Transparency of the dispersion panel is controlled depending on a distance between a user and the cooler to allow the user to selectively see the products.

An operation of the light source is determined depending on a distance between the user and the cooler, and transparency of the dispersion panel is controlled depending on the operation of the light source. If the user is located at a predetermined distance from the cooler or located to be far away from the predetermined distance, the dispersion panel may be configured to have reduced transparency, and if the user is located to be closer to the cooler than the predetermined distance, the dispersion panel may be maintained in a transparent state. In more detail, if the user is located at a predetermined distance from the cooler or located to be far away from the predetermined distance, the light source may be configured to irradiate light to the dispersion panel and the dispersion panel may have reduced transparency due to the irradiated light, and if the user is located to be closer to the cooler than the predetermined distance, the light source may be configured so as not to irradiate light, and the dispersion panel may maintain its transparent state.

If the light source irradiates light to the dispersion panel, the dispersion panel may be configured to scatter the light irradiated thereinto, and thus, have reduced transparency. Also, the dispersion panel may be made of a transparent material, and may be configured so as not to generate scattering of any light, thereby maintaining transparency if there is no light directly incident upon the dispersion panel. Moreover, if the user is located at a predetermined distance from the cooler or located to be far away from the predetermined distance, the dispersion panel may have reduced transparency, and the products may be covered by the dispersion panel to allow the products not to be seen to the user, and if the user is located to be closer to the cooler than the predetermined distance, the dispersion panel may be transparent and the products may be seen to the user through the transparent display panel and the dispersion panel.

The transparent display assembly further includes a proximity sensor that measures the distance between the user and the cooler. The dispersion panel may include a body made of a first material, and particles arranged in the body and made of a second material having a refractive index different from a refractive index of the first material. The particles may be configured to scatter light, which is irradiated from the light source into the dispersion panel, due to a refractive index different from that of the body. The first and second materials may be transparent, and may be configured to continue to maintain a transparent state if there is no light directly incident upon the dispersion panel.

If the user is located at a predetermined distance from the cooler or located to be far away from the predetermined distance, the transparent display panel may be configured to provide information on the products kept in the cooler and/or information of a product which is not kept in the cooler. Also, if the user is located to be closer to the cooler than the predetermined distance, the transparent display panel may provide only information on the products kept in the cooler or may not provide any information.

The door may include a frame, and front and rear glasses inserted to the frame and spaced apart from each other to form a space for receiving the transparent display assembly. The transparent display panel may be spaced apart from the front glass at a predetermined interval or adhered to the front glass.

A cooler according to embodiments may have at least the following advantages.

The cooler may control transparency of the dispersion panel depending on a distance between a user and the cooler, and may also control whether products therein are seen by the user. In accordance with such controls, the products in the cooler or information of the transparent display assembly may be selectively seen byte user. Therefore, when the user is located to be far away from the cooler, predetermined information may be clearly seen by the user to stimulate a purchasing intention by the user, and when the user is located to be close to the cooler, the products in the cooler may be clearly seen by the user clearly to assist product selection by the user. As a result, the cooler according to embodiments may control the transparent display assembly optimally, whereby efficiency may be maximized.

Further scope of applicability of the embodiments will become apparent from the detailed description.

### BRIEF DESCRIPTION OF THE DRAWINGS

Embodiments will be described in detail with reference to the following drawings in which like reference numerals refer to like elements, and wherein:
FIG. 1 is a perspective view illustrating a cooler having a transparent display according to an embodiment;
FIG. 2 is a perspective view illustrating a state in which a door is removed from the cooler of FIG. 1;
FIGS. 3 and 4 are partial cross-sectional views taken along line III-III' of FIG. 1 to illustrate a transparent display assembly according to an embodiment;
FIG. 5 is a partial cross-sectional view illustrating a dispersion panel of a transparent display assembly according to an embodiment;
FIG. 6 is a plane view illustrating a dispersion panel according to an embodiment, in a state in which light is not irradiated from a light source;
FIG. 7 is a plane view illustrating a dispersion panel according to an embodiment, in a state in which light is irradiated from a light source;
FIG. 8 is a perspective view illustrating the cooler according to an embodiment when a user is spaced apart from the cooler at a predetermined distance or more; and
FIG. 9 is a perspective view illustrating the cooler according to an embodiment when a user is closer to the cooler than a predetermined distance or less.

### DETAILED DESCRIPTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context. Terms such as "comprise" "include" or "has" are used herein and should be understood that they are intended to indicate an existence of several components, functions or steps, disclosed in the specification, and it is also understood that greater or fewer components, functions, or steps may likewise be utilized. Also, for the same reason, it is to be understood that this application includes combination of features, numbers, steps, operations, elements, parts, etc., which are partially omitted from combination of features, numbers, steps, operations, elements, and parts, which are described using the aforementioned terminologies, as far as it does not depart from intention of the present invention.

A cooler described in this specification may include all commercial refrigerating devices, such as a walk-in cooler, a showcase, and a chiller, for example. However, it will easily be apparent to those skilled in the art that configuration and operation according to the embodiments disclosed herein may equally be applied to all refrigerating devices for home use, such as a refrigerator and a wine cooler, for example, and is not limited to commercial refrigerating devices only.

Also, the cooler may be used for activities related to purchasing of products in most cases. Therefore, "users" of the cooler may correspond to potential "purchasers" except staffs of a shop. For this reason, "users" refer to potential "purchasers" in the following description.

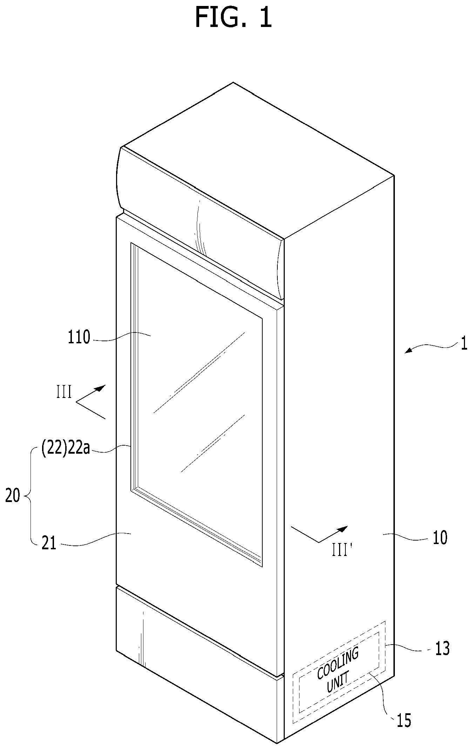

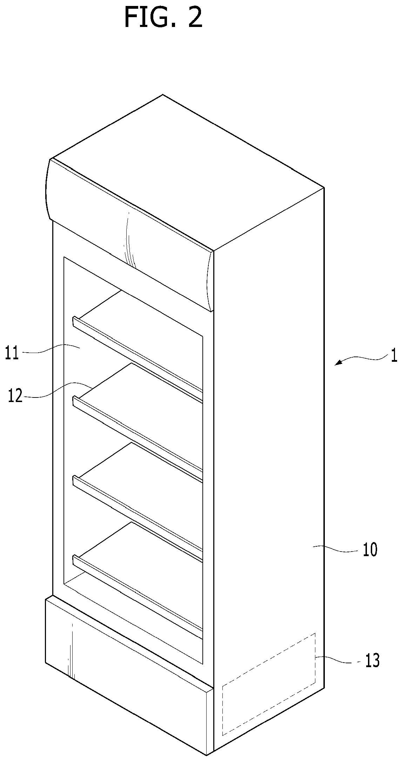

FIG. 1 is a perspective view illustrating a cooler having a transparent display according to an embodiment. FIG. 2 is a perspective view illustrating a state in which a door is removed from the cooler of FIG. 1.

The cooler or showcase 1 according to an embodiment may include a body 10. The body 10 may have a predetermined space 11 formed therein, as shown in FIG. 2. The body 10 may store products, which will be sold, in the space 11. In more detail, a plurality of racks 12 may be installed in the space 11. The products may be arranged on the plurality of racks 12, whereby the products may be supported by the plurality of racks 12 and stably stored in the space 11.

The cooler 1 may maintain the products in a cool condition to keep the products fresh for a long time. For such cooling, various methods may be provided. For example, the products may be directly cooled using a cooling member, such as a thermo element. Alternatively, the products may be indirectly cooled using cool air. The cooler 1 have been a large-sized space 11, as shown, and store more products, which will be cooled, therein. The cooler 1 may be configured to supply the cool air into the space 11 to effectively cool the large-sized space 11 and more products. That is, the cooler 1 may include a cooling unit or device 15 configured to supply the cool air to the space 11. The cooling unit 15 may use a cooling cycle, and may include various elements that perform the cooling cycle. For example, the cooling unit 15 may include an expansion valve, a compressor, a heat exchanger, and a refrigerant pipe. The refrigerant pipe may connect the expansion valve, the compressor, and the heat exchanger with one another and transport a phase-changed refrigerant. The cooled refrigerant may be heat-exchanged with air by the heat exchanger, and the cooled air may be supplied into the space 11 through a duct formed in the body 10. The cooled air supplied to the space 11 may cool the products through heat exchange with the products in the space 11, and the cooled air may be continuously supplied into the space 11 and maintain the products in a cooled condition. Also, a heat insulator may be arranged in the body 10 to avoid heat loss to air around the cooler 1. The above cooling units may be arranged in a machine chamber 13 formed in the cooler 1, as shown in FIGS. 1 and 2. However, the cooling unit 15 and the machine chamber 13 for receiving the cooling unit 15 may be arranged at another part or portion of the cooler 1 depending on a design of the cooler 1.

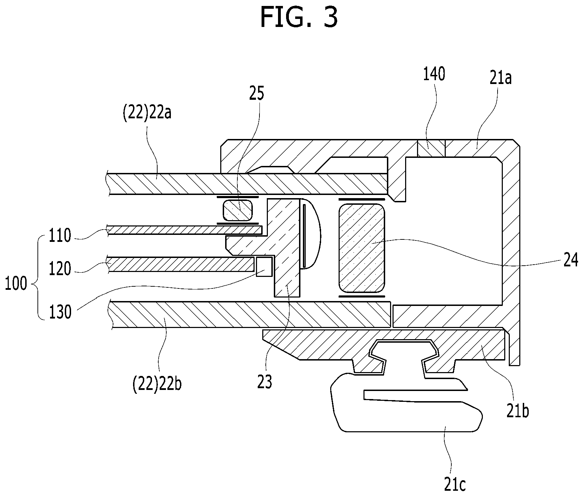

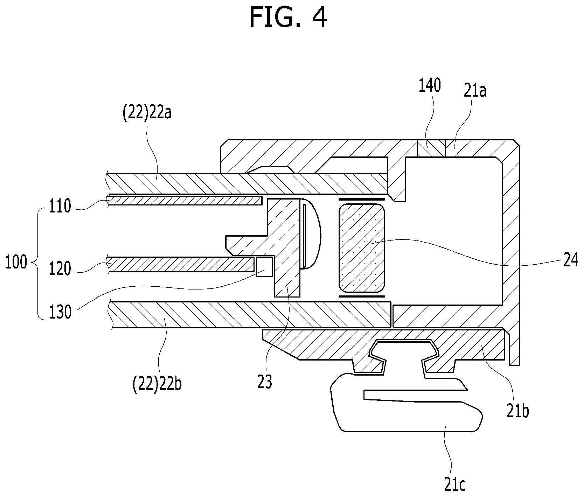

The cooler 1 may have a door 20 installed in or on the body 10. The door 20 may be arranged at an opened part or portion of the space 11, and may open or close the space 11. The door 20 may be rotatably installed in or on the body 10 to actively open or close the space. For example, one side of the door 20 may be installed in or on the body 10 using hinges. A user who uses the door 210 may open the space 11 and access the products. The user may close the space 11 using the door 20 to prevent the cool air from leaking out and keep the products in a cool condition. Also, as the cooler 1 may be installed in a shop to sell the products, the cooler 1 should be installed to allow the products to be well seen or easily viewable by a user, that is, a purchaser. Therefore, as shown in FIGS. 3 and 4, the door 20 may include a large-sized transparent glass 22 to allow the products kept in the cooler 1 to be well seen or easily viewable by the user.

Referring to FIGS. 3 and 4, the door 20 may include a frame 21. The frame 21 may include front and rear frames 21a and 21b configured to form a space in which the glass 22 may be inserted. Also, the door 20 may have a gasket 21c installed at the rear frame 21b adjacent to the body 10 of the cooler 1. The gasket 21c may be interposed between the door 20, that is, the rear frame 21b, and the body 10, and may be directly in contact with the body 10 instead of the frame 21. The gasket 21c may be made of a deformable elastic material. The gasket 21c may be directly in contact with the body 10 when the door 20 closes the space 11, and may be adhered to the body 10 while being deformed. Therefore, the gasket 21c may effectively prevent the cool air from being leaked out from the space 11. Moreover, the gasket 21c may include a magnet therein. The body 11 may include a magnet at a contact part or portion with the gasket 21c, or may be made of a material that may magnetize the contact part. In this case, when the door 20 is closed, the gasket 21c may be adhered to the body 10 or the magnet of the body 10, and may be adhered to the body 10 to more effectively prevent the cool air from being leaked out.

Generally, the door 20 may have a glass 22 made of a single member. However, in order to increase an insulation effect as shown, the glass 22 may include dual glasses 22a and 22b. In more detail, the door 20 may have front and rear glasses 22a and 22b inserted between the front and rear frames 21a and 21b. The front glass 22a may be adjacent to the front frame 21a, and may face an outside of the cooler 1. Also, the rear glass 22b may be adjacent to the rear frame 21b, and may face an inside of the cooler 1, that is, the space 11. The front and rear glasses 22a and 22b may be spaced apart from each other at a predetermined interval, whereby a predetermined space may be formed between the glasses 22a and 22b. Air may exist within the space, and have a heat conductivity which is significantly low. Therefore, the door 20 may be substantially made of dual glasses 22a and 22b and a heat insulation layer made of air and arranged between the glasses 22a and 22b. For this reason, the door 20 may have a high heat insulation effect that allows the products in the cooler 1 to be well seen or easily viewable by a user through the large-sized glass 22 and keeps the products in a cool condition for a long time. Meanwhile, if foreign substances, such as dirt, are inserted to or in the space between the dual glasses 22a and 22b, transparency of the glasses 22a and 22b may be reduced, and the products in the cooler 1 may not be seen by the user. In particular, if water permeates into the space between the dual glasses 22a and 22b, water in the air may be condensed on the glasses 22a and 22b due to a temperature difference with the outside, and the transparency of the glasses 22a and 22b may deteriorate in a same manner as the foreign substances. Therefore, the door 20 may have a seal 24 arranged between the glasses 22a and 22b. The seal 24 may seal the space between the glasses 22a and 22b, and may effectively prevent the foreign substances or water from permeating into the space.

Also, the cooler 1 may have a transparent display assembly 100 configured to provide a user with predetermined information. The transparent display assembly 100 may provide an advertisement on a specific product or information of the products in the cooler 1, and in addition, may provide various kinds of information to the user. The transparent display assembly 100 may allow the user to see the products in the cooler 1 due to its transparent body while providing the user with the above information. In order to use this characteristic of the transparent display assembly 100, the transparent display assembly 100 may be installed in the door 20 so as to be well seen or easily viewable by the user. Moreover, the transparent display assembly 100 may be installed in the transparent glass 22 of the door 20 to maintain a transparency required to show both predetermined information and the products to the user. As the transparent display assembly 100 may not have a high structural strength, if the assembly 100 is arranged outside the glass 22, the assembly 100 may be easily damaged. Meanwhile, as described above, the predetermined space may be formed between the dual glasses 22a and 22b. Therefore, the transparent display assembly 100 may be received in the space between the dual glasses 22a and 22b, as shown in FIGS. 3 and 4.

In more detail, the transparent display assembly 100 includes a transparent display panel 110. The transparent display panel 110 may include a LCD (Liquid Crystal Display), an OLED (Organic Light-Emitting Diode), or an Electro-Wetting Display, for example. These panels 110 may be categorized into emissive transparent display panels and passive transparent display panel in accordance with a scheme for realizing transparency. A transparent LCD is a passive transparent display panel, and a transparent OLED is an emissive transparent display panel. As the principle of these transparent display panels 110 is already known, it will be omitted in the following description.

The transparent display panel 110 may be arranged to adjoin the front glass 22a, whereby information displayed for the user may be transferred or transmitted to the user. However, in this case, when the front glass 22a is damaged, the transparent display panel 110 adjacent to the front glass 22a may be damaged together with the front glass 22a. Therefore, as shown in FIG. 3, the transparent display panel 110 may be spaced apart from the front glass 22a at a predetermined interval. To this end, a spacer 25 may be interposed between the transparent display panel 110 and the front glass 22a as shown. On the other hand, although the space between the dual glasses 22a and 22b is sealed by the seal 24, as described above, air may exist in the space together with some water. In particular, as the front glass 22a is directly in contact with the external air having a relatively high temperature, residual water may easily be condensed inside the front glass 22a, within the space between an inner surface of the front glass 22a and the transparent display panel 110. Therefore, the user may not easily see the information displayed on the transparent display panel 110. For this reason, as shown in FIG. 4, the transparent display panel 110 may be attached to the front glass 22a. In more detail, the transparent display panel 110 may be adhered to the inner surface of the front glass 22a. For such adhesion, various adhering means including an adhesive may be used. A space to allow the air including water or condensation of such water does not exist between the transparent display panel 110 and the front glass 22, which are adhered to each other. Therefore, on the adhered panel 11, display and provision of information is not affected by water condensation between the dual glasses 22a and 22b.

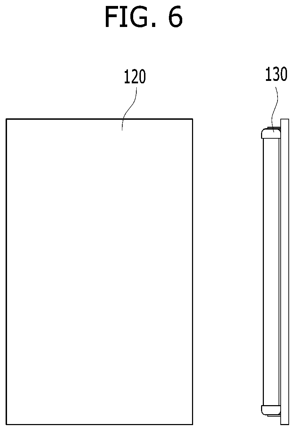

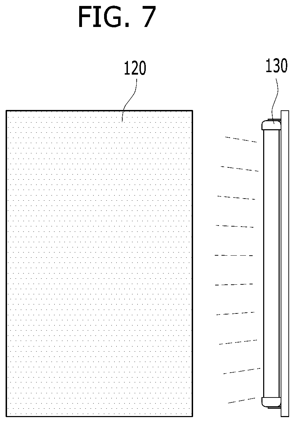

The transparent display assembly 100 further includes a dispersion panel 120 arranged at a rear of the transparent display panel 110. Also, the transparent display assembly 100 includes a light source 130 arranged at a side of the dispersion panel 120. A support 23 may be arranged between the dual glasses 22a and 22b, whereby the dispersion panel 120 and the light source 130 may be installed at the aforementioned locations. That is, the dispersion panel 120 and the light source 130 may be installed on the support 23. Also, the support 23 may support the panel 110 as well as the dispersion panel 120 and the light source 130. The dispersion panel 120 is configured to control its transparency depending on whether light is irradiated toward the side of the dispersion panel 120. The light source 130 may include a lamp, and may be configured to irradiate light to the side of the dispersion panel 120. As shown in FIGS. 6 and 7, the light source 130 may extend along the side of the dispersion panel 120 to uniformly irradiate light toward the side of the dispersion panel 120.

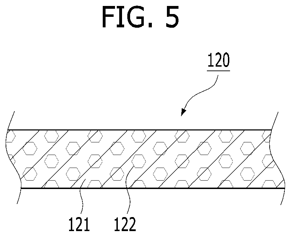

The dispersion panel 120 may be configured to scatter light incident upon its inner side through its side, thereby controlling its transparency. In more detail, the dispersion panel 120 may include a body 121 made of a first material, and particles 122 made of a second material different from the first material, as shown in FIG. 5. Each particle 122 may be a fine particle having a diameter of several micrometers, and may be included in the body 121. The first material and the second material may be transparent materials. However, the first and second materials may have respective refractive indexes different from each other. Therefore, if the light source 130 irradiates light toward the side of the dispersion panel 120, the light incident upon the side of the dispersion panel 120 may move through total reflection within the dispersion panel 120. If this light encounters the particles 122 during movement, the light may be scattered due to the refractive index of the particles 122 which is different from the refractive index of the body 121. Therefore, as shown in FIG. 7, if light is irradiated toward the side of the dispersion panel 120 by the light source 130, transparency of the dispersion panel 120 is deteriorated by scattering of the light generated therein. However, if the light source 130 does not irradiate light toward the side of the dispersion panel 120, scattering of the light incident upon the dispersion panel 120 may not be generated. Therefore, as shown in FIG. 6, the dispersion panel 120 may maintain a transparent state due to the body 121 and the particles 122, which are made of the transparent first and second materials. That is, if the light source 130 irradiates light toward the dispersion panel 120, in particular, the side of the dispersion panel 120, transparency of the dispersion panel 120 deteriorates, whereas if the light source 130 does not irradiate light toward the dispersion panel 120, in particular, the side of the dispersion panel 120, the dispersion panel 120 maintains a transparent state due to the transparency of its materials.

The transparent display assembly 100 includes a proximity sensor 140 that measures a distance between a user and the cooler 1. In the shop, the user may approach toward a front of the cooler 1 to purchase a product, and the proximity sensor 140 may be installed in the door 20 arranged at the front of the cooler 1. As shown, as the front frame 21a of the door 20 is exposed to the outside of the cooler 1, and thus, faces the user, the proximity sensor 140 may be installed in the front frame 21a. However, if the distance between the user and the cooler 1 is measured exactly, the proximity sensor 140 may be installed anywhere on the cooler 1 in addition to the door 20. As discussed in a description of an operation of the cooler 1 according to this embodiment, which will be described hereinbelow, the distance between the user and the cooler 1, which is measured by the proximity sensor 140, is used to control the transparency of the dispersion panel 130, whereby the distance may be a basis for optimized control of the cooler 1.

Operation of the cooler 1 will now be described based on the aforementioned structure of the cooler 1.

As the cooler 1 may be installed in a commercial facility, that is, a retailer or a wholesaler, the cooler 1 may be configured to stimulate a purchasing desire of a user, that is, a potential purchaser, in addition to a basis function of keeping products in a cool condition. As the cooler 1 may include the transparent display assembly 100, as described above, the cooler 1 may allow the user to see the products therein while providing an advertisement or information of the products therein. The advertisement may be related to the products kept in the cooler 1 or another product not the products kept in the cooler 1. Therefore, the cooler 1 may perform a function of guiding purchasing of the user and at a same time perform an additional function for exposing or showing an advertisement of a specific product to the user.

In the meanwhile, when the user, that is, a potential purchaser is located farther away from the cooler 1, the user may be guided to the cooler 1 by product information displayed by the transparent display assembly 100 to purchase the product. Also, as the user is substantially concentrated or focused on information on the product and the actual product in a state in which the user is close to the cooler 1, the advertisement should be well seen or easily viewable by a user who is located to be far away or farther from the cooler 1 regardless of an advertisement of a specific product or the products kept in the cooler 1. That is, it is important that the products in the cooler 1 should be well seen or easily viewable by a user who is located close to the cooler 1, whereas it is important that an advertisement or another information, which may be provided from the cooler 1 using the transparent display assembly 1, should be well seen or easily viewable by a user who is located to be far or farther away from the cooler 1. Therefore, in order to use the cooler 1 having the transparent display assembly 100 more effectively, the cooler 1 needs to selectively provide a user with information, that is, an advertisement and another information through the transparent display assembly 100 or an appearance of the product, which will be actually sold, through the glass 22 of the door 20, in accordance with a relative distance between the user and the cooler 1. For this reason, the cooler 1 may be configured to allow the user to selectively see information through the transparent display assembly 100 in accordance with the distance between the user and the cooler 1. In other words, the cooler 1 may allow the user to selectively see the products in the cooler 1 in accordance with the distance between the user and the cooler 1. Also, the user may approach the door 20 to see the products or take out the products in most cases, whereby the distance between the user and the cooler 1 may be substantially a distance between the user and the door 20. Based on this concept and principle, the operation of the cooler 1 will be described in more detail hereinbelow.

First, if a user enters the shop to purchase a product, the user may be located at a predetermined distance from the cooler 1 or the door 20 of the cooler 1, or may be located to be far or farther away from the predetermined distance. That is, the distance between the user and the cooler 1 or the distance between the user and the door 20 of the cooler 1 may be the predetermined distance or less. The predetermined distance may be a distance that allows the user not to identify the products in the cooler 1 clearly with the naked eye. However, the predetermined distance may be varied depending on various factors, such as a condition in the shop, types of products, or an advertisement which is provided. Although the predetermined distance may be measured by various methods, according to this invention, the predetermined distance is measured by the proximity sensor 140 installed in the cooler 1 as described above.

The proximity sensor 140 may continue to or continuously measure the distance between the user and the cooler 1 or the door 20, and transfers the measured distance to a controller (not shown) installed in the cooler 1 as an electric signal. The controller compares the received distance with a predetermined distance which is preset or predetermined. If the controller determines that the received distance is more than the predetermined distance, the controller turns on the light source 130. In other words, if the user is located at a predetermined distance from the cooler 1 or the door 20, or located to be far away or farther from the predetermined distance, the light source 130 is configured to be turned on to irradiate light.

If the user is located at the predetermined distance or located to be far or farther away from the predetermined distance, the cooler 1, in particular, the transparent display assembly 100 may provide the user with other information which is not related to the products, for example, an advertisement of another product not the products kept in the cooler 1. That is, as the user does not have an exact intention to purchase the product yet, such information may be provided. However, information directly related to the products, for example, an advertisement of the products kept in the cooler 1 and a price and quality of the products kept in the cooler 1 may be provided to the user to more actively promote purchase of the user. If the cooler 1 provides other information different from the aforementioned information, the aforementioned information may be provided selectively when it is determined that the user is located to be more than the predetermined distance away from the cooler 1. If the controller determines that the received distance is more than the predetermined distance during the aforementioned display, the controller may control the transparent display assembly 100 to display the aforementioned display information.

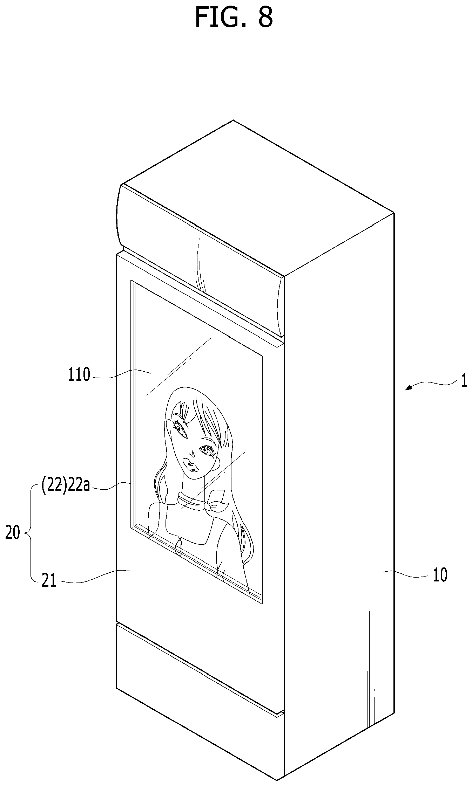

If the light source 130 irradiates light, the dispersion panel 120 is configured to have reduced transparency. As described above, if the light source 130 irradiates light to the side of the dispersion panel 120, the light incident upon the side of the dispersion panel 120 may move or shine within the dispersion panel 120 and may be scattered due to different refractive indexes of the body 121 and the particles 122 when the light encounters the particles 122 during movement. Therefore, as shown in FIG. 7, if the light source 130 irradiates light, transparency of the dispersion panel 120 may be deteriorated by scattering of the light generated therein. If the dispersion panel 120 has reduced transparency, the products in the cooler 1 may be covered or veiled by the dispersion panel 120, whereby the products in the cooler 1 may not be seen by the user. That is, the user cannot see the products in the cooler 1 clearly through the glass 22 due to the dispersion panel 120 which becomes substantially opaque. Instead, as shown in FIG. 8, as the dispersion panel 120 has reduced transparency, information displayed on the panel 110 may be more clearly seen by the user. That is, the dispersion panel 120, which is substantially opaque, may provide the transparent display panel 110 with a dark background, and the information on the panel 110 may be seen clearly by the user as compared with the dark background. In contrast, the transparent display in the conventional cooler cannot provide a user located to be far away from the cooler, with information which is clearly displayed, due to its transparency.

On the other hand, if the user approaches the cooler 1, the user may be located to be closer to the cooler 1 or the door 20 of the cooler 1 than the predetermined distance. That is, the distance between the user and the cooler 1 or the door 20 of the cooler 1 may be less than the predetermined distance. The user may be guided by information provided by the cooler 1, in particular, the transparent display assembly 100, to purchase the product or may approach the cooler 1 to identify the product more exactly or easily. On the other hand, the user may approach the cooler 1 due to several other reasons.

The proximity sensor 140 may continue to or continuously measure the distance between the user and the cooler 1 or the door 20, and the controller may continue to or continuously compare the distance received from the proximity sensor 140 with the predetermined distance which is preset or predetermined. If the controller determines that the received distance is less than the predetermined distance, the controller turns off the light source 130. That is, if the user is closer to the cooler 1 or the door 20 than the predetermined distance, the light source 130 is configured to be turned off so as not to irradiate light.

In the meanwhile, if the user is located to be less than the predetermined distance, it may be regarded that the user is basically interested in the product kept in the cooler 1 or has a purchasing intention with respect to the product. Even though the user is not interested in the product kept in the cooler 1 or does not have the purchasing intention with respect to the product, as the user is located to be close to the cooler 1, it is favorable to attract the attention of the user to the product to purchase the product. Therefore, if the user is located to be less than the predetermined distance, the cooler 1, in particular, the transparent display assembly 100, may provide the user with only information related to the product. On the other hand, as it may be regarded that the user has a purchasing intention with respect to the product kept in the cooler 1, the cooler 1, in particular, the transparent display assembly 100 may not display any information so that the user may concentrate on the actual product. Actually, if the controller determines that the received distance is less than the predetermined distance during the display, the controller may control the transparent display assembly 100 to display the aforementioned information, or may control the transparent display assembly 100 so as not to display any information.

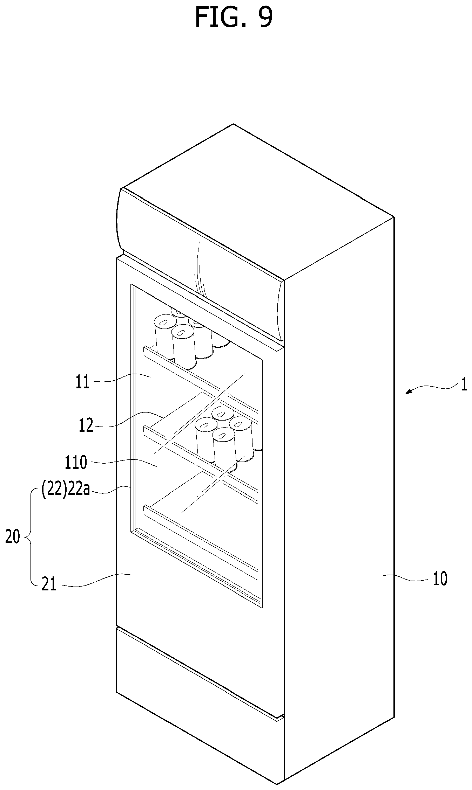

If the light source 130 does not irradiate light, the dispersion panel 120 may maintain or be maintained in a transparent state. As described above, although the body 121 and the particles 122 have their respective refractive indexes different from each other, each of the body 121 and the particles 122 is basically made of a transparent material. Therefore, if light does not enter the dispersion panel 120 directly, the dispersion panel 120 does not generate scattering of light. For this reason, as shown in FIG. 6, if the light source 130 does not irradiate light, the dispersion panel 120 may continue to maintain the transparent state in the same manner as the glass 22 and the panel 110. As shown in FIG. 9, if the dispersion panel 120 is transparent, the user may see the products kept in the cooler 1 clearly through the transparent glass 22, the panel 110, and the dispersion panel 120. As described above, the transparent display panel 110 cannot easily provide the user located to be far away from the cooler with information, due to its transparency, but the user located to be close to the cooler may easily identify the information on the transparent panel 110. Therefore, even though the transparent display assembly 100 displays the aforementioned predetermined information, this information may be clearly seen to the user who is located to be less than the predetermined distance from the cooler 1.

As is apparent from the aforementioned operation of this embodiment, operation of the light source 130 is determined depending on the distance between the user and the cooler 1, and transparency of the dispersion panel 120 is controlled depending on the operation of the light source 130. Also, whether the product in the space 11 is seen by the user is determined depending on a change in transparency. In more detail, if the user approaches the cooler 1, light is not irradiated from the light source 130, whereby the dispersion panel 120 becomes transparent, and the user may see the inside of the cooler 1 through the transparent display assembly 100 and the glass 22. Meanwhile, if the user is located to be far away from the cooler 1, light is irradiated from the light source 130, whereby the dispersion panel 120 has reduced transparency, and the user may well see or easily view the information displayed by the transparent display assembly 100 instead of seeing the inside of the cooler 1 through the dispersion panel 120. As a result, the cooler 1 may control transparency of the dispersion panel 120 in accordance with the distance between the user and the cooler 1 to allow the user to selectively see the products. In more detail, as described above, as the transparency of the dispersion panel 120 is controlled by irradiation of light, the cooler 1 may determine whether to operate the light source 130 depending on the distance between the user and the cooler 1 to control the transparency of the dispersion panel 120.

The products in the cooler 1 or information of the transparent display assembly 100 may be selectively seen by the user by control of the transparency of the dispersion panel 120 based on the distance between the user and the cooler 1 and control of visibility. Therefore, when the user is located to be far away from the cooler 1, predetermined information may be clearly seen by the user to stimulate the purchasing intention of the user, and when the user is located to be close to the cooler 1, the products in the cooler 1 may be clearly seen by the user to assist product selection by the user. As a result, according to this embodiment, the transparent display assembly 100 may be controlled optimally, whereby efficiency of the cooler 1 may be maximized.

It will be apparent to those skilled in the art that the embodiments disclosed herein can be embodied in other specific forms without departing from the scope of the invention as described by the appended claims. Thus, the above embodiments are to be considered in all respects as illustrative and not restrictive.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

## Claims

1. A cooler (1) having a transparent display, the cooler (1) comprising:
a body (10) having a storage space (11) configured to receive products therein;
a door (20) installed on the body (10) to open and close the storage space (11); and
a display assembly (100) installed in the door (20) and configured to display predetermined information related to the products,
a proximity sensor (140) for measuring a distance between a user and the cooler (1),
a controller adapted to control a transparency of the display assembly (100) depending on the distance between a user and the cooler (1) wherein the display assembly (100) comprises:
a transparent display panel (110);
a dispersion panel (120) arranged at a rear of the transparent display panel (110) and configured to scatter light, which is incident upon the dispersion panel (120) to reduce a transparency thereof; and
a light source (130) that irradiates light to an inside of the dispersion panel (120), wherein the controller is adapted to control a transparency of the dispersion panel (120) depending on the distance between the user and the cooler (1) to allow the user to selectively see the products, and **characterized in that** the controller is adapted to determine turning on or off the light source (130) depending on the distance between the user and the cooler (1), and
to control the transparency of the dispersion panel (120) depending on the turning on or off the light source (130).

2. The cooler according to claim 1, wherein, if the user is located at a predetermined distance from the cooler (1) or located farther away than the predetermined distance, the display assembly (100) is configured to have reduced transparency, and if the user is located to be closer to the cooler (1) than the predetermined distance, the display assembly (100) is transparent.

3. The cooler according to claim 1 or 2, wherein, if the user is located at a predetermined distance from the cooler (1) or located farther away than the predetermined distance, the light source (130) is configured to irradiate light to the dispersion panel (120) and the dispersion panel (120) has reduced transparency due to the irradiated light, and if the user is located to be closer to the cooler (1) than the predetermined distance, the light source (130) is configured so as not to irradiate light, and the dispersion panel (120) maintains its transparent state.

4. The cooler according to any one of the claims 1 to 3, wherein, if the light source (130) irradiates light to the dispersion panel (120), the dispersion panel (100) is configured to scatter the light irradiated thereinto and thus have reduced transparency.

5. The cooler according to any one of the claims 1 to 4, wherein the dispersion panel (120) is made of a transparent material, and is configured so as not to generate scattering of any light, thereby maintaining transparency if there is no light directly incident upon the dispersion panel (120).

6. The cooler according to any one of the claims 1 to 5, wherein, if the user is located at a predetermined distance from the cooler (1) or located farther away than the predetermined distance, the display assembly (100) has reduced transparency, and the products are covered by the dispersion panel (120) to prevent the product from being seen by the user, and if the user is located to be closer to the cooler (1) than the predetermined distance, the display assembly (100) is transparent and the products are viewable by the user through the transparent display panel (110) and the dispersion panel (120).

7. The cooler according to any one of the claims 1 to 6, wherein the dispersion panel (120) includes:
a body (121) made of a first material; and
particles (122) arranged in the body (121) and made of a second material having a refractive index different from a refractive index of the first material.

8. The cooler according to claim 7, wherein the particles (122) are configured to scatter light, which is irradiated from the light source (130), into the dispersion panel (120), due to the refractive index different from the refractive index of the body (121).

9. The cooler according to claim 7 or 8, wherein the first and second materials are transparent, and are configured to continue to maintain a transparent state if there is no light directly incident upon the dispersion panel (120).

10. The cooler according to any one of the claims 1 to 9, wherein, if the user is located at a predetermined distance from the cooler (1) or located farther away than the predetermined distance, the display assembly (100) is configured to provide information on the products kept in the cooler (1) and/or information of a product which is not kept in the cooler (1).

11. The cooler according to any of the claims 1 to 10, wherein, if the user is located to be closer to the cooler (1) than the predetermined distance, the display assembly (100) provides only information on the products kept in the cooler (1) or does not provide any information.

12. The cooler according to any one of the claims 1 to 11, wherein the door (20) includes:
a frame (21); and
front and rear glasses (22a, 22b) inserted into the frame (21) and spaced apart from each other to form a space to receive the display assembly (100), and
wherein the transparent display panel (110) is spaced apart from the front glass (22a) at a predetermined interval or adhered to the front glass (22a).

## Patentansprüche

1. Kühlvorrichtung (1), die eine lichtdurchlässige Anzeige aufweist, wobei die Kühlvorrichtung (1) Folgendes umfasst:
einen Körper (10), der einen Lagerraum (11) aufweist, der konfiguriert ist, Produkte aufzunehmen;
eine Tür (20), die in dem Körper (10) installiert ist, um den Lagerraum (11) zu öffnen und zu schließen; und
eine Anzeigeanordnung (100), die in der Tür (20) installiert ist und konfiguriert ist, vorgegebene Informationen bezüglich der Produkte anzuzeigen,
einen Näherungssensor (140) zum Messen eines Abstands zwischen einem Benutzer und der Kühlvorrichtung (1),
eine Steuerung, die ausgelegt ist, eine Lichtdurchlässigkeit der Anzeigeanordnung (100) in Abhängigkeit von dem Abstand zwischen einem Benutzer und der Kühlvorrichtung (1) zu steuern, wobei
die Anzeigeanordnung (100) Folgendes umfasst:
eine lichtdurchlässige Anzeigeplatte (110);
eine Dispersionsplatte (120), die an einer Rückseite der lichtdurchlässigen Anzeigeplatte (110) angeordnet ist und konfiguriert ist, Licht zu streuen, das auf die Dispersionsplatte (120) trifft, um deren Lichtdurchlässigkeit zu verringern; und
eine Lichtquelle (130), die Licht zu einer Innenseite der Dispersionsplatte (120) strahlt, wobei
die Steuerung ausgelegt ist, eine Lichtdurchlässigkeit der Dispersionsplatte (120) in Abhängigkeit von dem Abstand zwischen dem Benutzer und der Kühlvorrichtung (1) zu steuern, damit der Benutzer wahlweise die Produkte sehen kann, und
**dadurch gekennzeichnet, dass** die Steuerung ausgelegt ist, ein Einschalten oder Ausschalten der Lichtquelle (130) in Abhängigkeit von dem Abstand zwischen dem Benutzer und der Kühlvorrichtung (1) zu bestimmen, und
die Lichtdurchlässigkeit der Dispersionsplatte (120) in Abhängigkeit von dem Einschalten oder Ausschalten der Lichtquelle (130) zu steuern.

2. Kühlvorrichtung nach Anspruch 1, wobei dann, wenn sich der Benutzer in einem vorgegebenen Abstand von der Kühlvorrichtung (1) befindet oder wenn er weiter als der vorgegebene Abstand entfernt ist, die Anzeigeanordnung (100) so konfiguriert ist, dass sie eine verringerte Lichtdurchlässigkeit aufweist, und wobei dann, wenn der Benutzer näher als der vorgegebene Abstand bei der Kühlvorrichtung (1) ist, die Anzeigeanordnung (100) lichtdurchlässig ist.

3. Kühlvorrichtung nach Anspruch 1 oder 2, wobei dann, wenn sich der Benutzer in einem vorgegebenen Abstand von der Kühlvorrichtung (1) befindet oder wenn er weiter als der vorgegebene Abstand entfernt ist, die Lichtquelle (130) konfiguriert ist, Licht zu der Dispersionsplatte (120) auszustrahlen, und die Dispersionsplatte (120) wegen des ausgestrahlten Lichts eine verringerte Lichtdurchlässigkeit aufweist, und wobei dann, wenn der Benutzer näher als der vorgegebene Abstand bei der Kühlvorrichtung (1) ist, die Lichtquelle (130) konfiguriert ist, kein Licht auszustrahlen, und die Dispersionsplatte (120) ihren lichtdurchlässigen Zustand beibehält.

4. Kühlvorrichtung nach einem der Ansprüche 1 bis 3, wobei dann, wenn die Lichtquelle (130) Licht zu der Dispersionsplatte (120) ausstrahlt, die Dispersionsplatte (100) konfiguriert ist, das Licht, das auf sie gestrahlt wird, zu streuen, und dadurch eine verringerte Lichtdurchlässigkeit aufzuweisen.

5. Kühlvorrichtung nach einem der Ansprüche 1 bis 4, wobei die Dispersionsplatte (120) aus einem lichtdurchlässigen Material hergestellt ist und konfiguriert ist, keine Streuung von Licht zu erzeugen, wodurch die Lichtdurchlässigkeit beibehalten wird, wenn kein Licht direkt auf die Dispersionsplatte (120) trifft.

6. Kühlvorrichtung nach einem der Ansprüche 1 bis 5, wobei dann, wenn sich der Benutzer in einem vorgegebenen Abstand von der Kühlvorrichtung (1) befindet oder wenn er weiter als der vorgegebene Abstand entfernt ist, die Anzeigeanordnung (100) eine verringerte Lichtdurchlässigkeit aufweist und die Produkte von der Dispersionsplatte (120) bedeckt sind, um zu verhindern, dass das Produkt von dem Benutzer gesehen wird, und wobei dann, wenn der Benutzer näher als der vorgegebene Abstand bei der Kühlvorrichtung (1) ist, die Anzeigeanordnung (100) lichtdurchlässig ist und die Produkte von dem Benutzer durch die lichtdurchlässige Anzeigeplatte (110) und die Dispersionsplatte (120) gesehen werden können.

7. Kühlvorrichtung nach einem der Ansprüche 1 bis 6, wobei die Dispersionsplatte (120) Folgendes umfasst:
einen Körper (121), der aus einem ersten Material hergestellt ist; und
Partikel (122), die in dem Körper (121) angeordnet sind und aus einem zweiten Material hergestellt sind, das eine Brechzahl aufweist, die sich von einer Brechzahl des ersten Materials unterscheidet.

8. Kühlvorrichtung nach Anspruch 7, wobei die Partikel (122) so konfiguriert sind, dass sie wegen der Brechzahl, die sich von der Brechzahl des Körpers (121) unterscheidet, Licht streuen, das von der Lichtquelle (130) in die Dispersionsplatte (120) gestrahlt wird.

9. Kühlvorrichtung nach Anspruch 7 oder 8, wobei das erste und das zweite Material lichtdurchlässig sind und konfiguriert sind, einen Lichtdurchlässigkeitszustand fortgesetzt beizubehalten, falls kein Licht direkt auf die Dispersionsplatte (120) trifft.

10. Kühlvorrichtung nach einem der Ansprüche 1 bis 9, wobei dann, wenn sich der Benutzer in einem vorgegebenen Abstand von der Kühlvorrichtung (1) befindet oder wenn er weiter als der vorgegebene Abstand entfernt ist, die Anzeigeanordnung (100) konfiguriert ist, Informationen bezüglich der Produkte, die in der Kühlvorrichtung (1) gelagert sind, und/oder Informationen bezüglich eines Produkts, das nicht in der Kühlvorrichtung (1) gelagert wird, bereitzustellen.

11. Kühlvorrichtung nach einem der Ansprüche 1 bis 10, wobei dann, wenn der Benutzer näher als der vorgegebene Abstand bei der Kühlvorrichtung (1) ist, die Anzeigeanordnung (100) nur Informationen bezüglich der Produkte, die in der Kühlvorrichtung (1) gelagert sind, bereitstellt, oder keine Informationen bereitstellt.

12. Kühlvorrichtung nach einem der Ansprüche 1 bis 11, wobei die Tür (20) Folgendes umfasst:
einen Rahmen (21); und
ein vorderes und ein hinteres Glas (22a, 22b), die in den Rahmen (21) eingesetzt sind und voneinander beabstandet sind, um einen Zwischenraum zu bilden, um die Anzeigeanordnung (100) aufzunehmen, und
wobei die lichtdurchlässige Anzeigeplatte (110) von dem vorderen Glas (22a) um einen vorgegebenen Abstand beabstandet ist oder an dem vorderen Glas (22a) haftet.

## Revendications

1. Réfrigérateur (1) ayant un affichage transparent, le réfrigérateur (1) comprenant :
un corps (10) ayant un compartiment de stockage (11) configuré pour recevoir des produits à l'intérieur ;
une porte (20) installée sur le corps (10) pour ouvrir et fermer le compartiment de stockage (11) ; et
un assemblage d'affichage (100) installé dans la porte (20) et configuré pour afficher des informations prédéterminées en relation avec les produits, un détecteur de proximité (140) pour mesurer une distance entre un utilisateur et le réfrigérateur (1),
un contrôleur adapté pour contrôler une transparence de l'ensemble d'affichage (100) en fonction de la distance entre un utilisateur et le réfrigérateur (1),
dans lequel
l'assemblage d'affichage (100) comprend :
un panneau d'affichage transparent (110) ;
un panneau de dispersion (120) agencé au niveau d'une partie arrière du panneau d'affichage transparent (110) et configuré pour diffuser une lumière incidente sur le panneau de dispersion (120) afin de réduire une transparence de celui-ci ; et
une source lumineuse (130) qui irradie de la lumière vers une partie intérieure du panneau de dispersion (120), dans lequel le contrôleur est adapté pour contrôler une transparence du panneau de dispersion (120) en fonction de la distance entre l'utilisateur et le réfrigérateur (1) pour permettre à l'utilisateur de voir sélectivement les produits, et
**caractérisé en ce que** le contrôleur est adapté
à déterminer l'activation ou la désactivation de la source lumineuse (130) en fonction de la distance entre l'utilisateur et le réfrigérateur (1), et
à contrôler la transparence du panneau de dispersion (120) en fonction de l'activation ou de la désactivation de la source lumineuse (130).

2. Réfrigérateur selon la revendication 1, dans lequel, si l'utilisateur est situé à une distance prédéterminée par rapport au réfrigérateur (1) ou situé plus loin que la distance prédéterminée, l'assemblage d'affichage (100) est configuré de manière à avoir une transparence réduite, et, si l'utilisateur est situé de manière à être plus proche du réfrigérateur (1) que la distance prédéterminée, l'assemblage d'affichage (100) est transparent.

3. Réfrigérateur selon la revendication 1 ou 2, dans lequel, si l'utilisateur est situé à une distance prédéterminée par rapport au réfrigérateur (1) ou situé plus loin que la distance prédéterminée, la source lumineuse (130) est configurée pour irradier de la lumière vers le panneau de dispersion (120) et le panneau de dispersion (120) a une transparence réduite due à la lumière irradiée, et, si l'utilisateur est situé plus près du réfrigérateur (1) que la distance prédéterminée, la source lumineuse (130) est configurée de manière à ne pas irradier de la lumière, et le panneau de dispersion (120) garde son état transparent.

4. Réfrigérateur selon l'une quelconque des revendications 1 à 3, dans lequel, si la source lumineuse (130) irradie de la lumière vers le panneau de dispersion (120), le panneau de dispersion (120) est configuré de manière à diffuser la lumière irradiée dans celui-ci et donc à présenter une transparence réduite.

5. Réfrigérateur selon l'une quelconque des revendications 1 à 4, dans lequel le panneau de dispersion (120) est fait dans un matériau transparent, et est configuré de manière à ne pas générer de diffusion d'une lumière quelconque, tout en maintenant une transparence s'il n'y a pas de lumière directement incidente sur le panneau de dispersion (120).

6. Réfrigérateur selon l'une quelconque des revendications 1 à 5, dans lequel, si l'utilisateur est situé à une distance prédéterminée par rapport au réfrigérateur (1) ou situé plus loin que la distance prédéterminée, l'assemblage d'affichage (100) a une transparence réduite, et les produits sont couverts par le panneau de dispersion (120) pour empêcher que le produit ne soit vu par l'utilisateur, et, si l'utilisateur est situé plus près du réfrigérateur (1) que la distance prédéterminée, l'assemblage d'affichage (100) est transparent et les produits peuvent être vus par l'utilisateur à travers le panneau d'affichage transparent (110) et le panneau de dispersion (120).

7. Réfrigérateur selon l'une quelconque des revendications 1 à 6, dans lequel le panneau de dispersion (120) inclut :
un corps (121) fait dans un premier matériau ; et
des particules (122) agencées dans le corps (121) et faites dans un deuxième matériau ayant un indice de réfraction différent d'un indice de réfraction du premier matériau.

8. Réfrigérateur selon la revendication 7, dans lequel les particules (122) sont configurées pour diffuser de la lumière, qui est irradiée depuis la source lumineuse (130), jusque sur le panneau de dispersion (120), en raison de l'indice de réfraction différent de l'indice de réfraction du corps (121).

9. Réfrigérateur selon la revendication 7 ou 8, dans lequel les premier et deuxième matériaux sont transparents, et sont configurés de manière à continuer à garder un état transparent s'il n'y a pas de lumière directement incidente sur le panneau de dispersion (120).

10. Réfrigérateur selon l'une quelconque des revendications 1 à 9, dans lequel, si l'utilisateur est situé à une distance prédéterminée par rapport au réfrigérateur (1) ou situé plus loin que la distance prédéterminée, l'assemblage d'affichage (100) est configuré de manière à fournir des informations sur les produits conservés dans le réfrigérateur (1) et/ou des informations sur un produit qui n'est pas conservé dans le réfrigérateur (1).

11. Réfrigérateur selon l'une quelconque des revendications 1 à 10, dans lequel, si l'utilisateur est situé plus près du réfrigérateur (1) que la distance prédéterminée, l'assemblage d'affichage (100) fournit uniquement des informations sur les produits conservés dans le réfrigérateur (1) ou ne fournit pas d'informations du tout.

12. Réfrigérateur selon l'une quelconque des revendications 1 à 11, dans lequel la porte (20) inclut :
un châssis (21) ; et
des vitres avant et arrière (22a, 22b) insérées dans le châssis (21) et distantes l'une de l'autre de manière à former un espace permettant de recevoir l'assemblage d'affichage (100), et
dans lequel le panneau d'affichage transparent (110) est espacé de la vitre avant (22a) d'un intervalle prédéterminé ou bien adhère à la vitre avant (22a).
